# EUROPÄISCHE PATENTSCHRIFT

(11) **EP 0 456 970 B1**
(45) Veröffentlichungstag und Bekanntmachung des Hinweises auf die Patenterteilung: **20.07.1994**
(21) Anmeldenummer: 91102677.1
(22) Anmeldetag: 23.02.1991
(51) Int. Cl.: B29C 47/28, B29C 47/02

(54) **Einrichtung zum kontinuierlichen Ummanteln von zylindrischen Werkstücken mit einem elastischen Material**
Apparatus for the continuous coating of cylindrical elements with elastic material
Dispositif pour le revêtement continu d'éléments cylindriques avec un matériau élastique

(30) Priorität: 17.05.1990 DE 4015863
(43) Veröffentlichungstag der Anmeldung: 21.11.1991
(73) Patentinhaber: HERMANN BERSTORFF Maschinenbau GmbH, D-30627 Hannover (Kleefeld) (DE)
(72) Erfinder: Brodmann. Joachim, W-3000 Hannover 81 (DE); Müller-Erwig, Horst, Dipl.-Ing., W-3057 Neustadt 2 (DE)

(56) Entgegenhaltungen:
- EP-A- 0 095 010
- EP-A- 0 231 976
- DE-A- 1 809 470
- US-A- 2 057 043
- US-A- 3 833 247
- PATENT ABSTRACTS OF JAPAN vol. 7, no. 149 (M-225)(1294)30. Juni 1983 & JP-A-58 059 827 ( FURUKAWA DENKI KOGYO K.K. ) 9. April 1983
- PATENT ABSTRACTS OF JAPAN vol. 5, no. 131 (M-84)(803) 21.August 1981 & JP-A-56 067 239 ( FURUKAWA DENKI KOGYO K.K. ) 6. Juni 1981
- PATENT ABSTRACTS OF JAPAN vol. 11, no. 381 (C-464)(2828) 12. Dezember 1987 & JP-A-62 153 101 ( ISHIKAWATOKI TEKKOSHO K.K. ) 8. Juli 1987

## Beschreibung

Die Erfindung betrifft eine Einrichtung der Gattung wie beschrieben im Oberbegriff des ersten Patentanspruchs.

Eine derartige Einrichtung ist bekannt aus der europäischen Offenlegungsschrift Nr. 0 231 976. Mittels dieser Einrichtung werden beispielsweise metallische polygrafische Walzen u.dgl. mit einer Kautschukschicht ummantelt.

Der Vorteil dieser Einrichtungen zum Ummanteln zylindrischer Werkstücke besteht darin, daß eine kontinuierliche Arbeitsweise durchführbar ist und daß derartig hergestellte Walzenmäntel weder in Längsrichtung noch auf ihrem Umfang Fließmarkierungen durch ein Führungsrohr haltende Dornhaltestege aufweisen.

Nachteilig ist, daß im Falle eines Material- bzw. Werkzeugswechsels (Dimensionswechsel) der Austrittsbereich des Materialverteilerraumes nur sehr umständlich und zeitraubend gereinigt werden kann. Zu diesem Zweck muß der Kopf völlig zerlegt und somit der Belegungsvorgang für viele Stunden unterbrochen werden.

Es ist die Aufgabe der Erfindung, im Falle eines Materialwechsels bzw. einer Produktionsunterebrechung eine schnelle und leichte Entfernung des plastischen Materials aus dem Kopf zu ermöglichen und somit ein Anvulkanisieren von z.B. Kautschuk in dem zu temperierenden Austrittsbereich zu verhindern bzw. ein leichtes Wechseln der Werkzeuge zu ermöglichen.

Die Aufgabe wird bei einer Einrichtung gemäß dem Oberbegriff des ersten Patentanspruchs gelöst durch die Merkmale im kennzeichnenden Teil.

Im Falle eines Materialwechsels werden
- die Verschraubungen des Mundstückes mit den Halbschalen gelöst,
- eine große Ringmutter für die axile Verspannung der Halbschalen eine Viertelumdrehung zurück geschraubt,
- die Augbolzen an der oberen axialen Teilungsfuge der Halbschalen gelöst und weggeschwenkt, dann können
- die Halbschalen selbst um ein unteres Scharnier geschwenkt werden,
- der somit freiliegende hülsenförmige Innenkonus wird nach vorne abgezogen

und der Materialpfropfen auf dem Ausformungsrohr ist frei zugänglich. Das in den Gängen der Materialverteilerhülse sich befindende Material wird durch die Drehung der Hülse nach vorne gefördert, so daß auch dieser Bereich frei von Material ist.

Somit wird durch die Ausbildung des austrittsseitigen Endes des Zylindergehäuses als aufklappbare Halbschalen für die Aufnahme des hülsenartigen Innenkonusses ein sehr schneller und problemloser Wechsel des jeweiligen Werkzeuges aber auch ein schneller Materiawechsel ermöglicht.

Ein Ausführungsbeispiel der Erfindung wird in den Zeichnungen gezeigt und nachfolgend erläutert.

Es zeigen:
- Fig. 1: eine perspektivische Ansicht einer Einrichtung zum Ummanteln von zylindrischen Körpern.

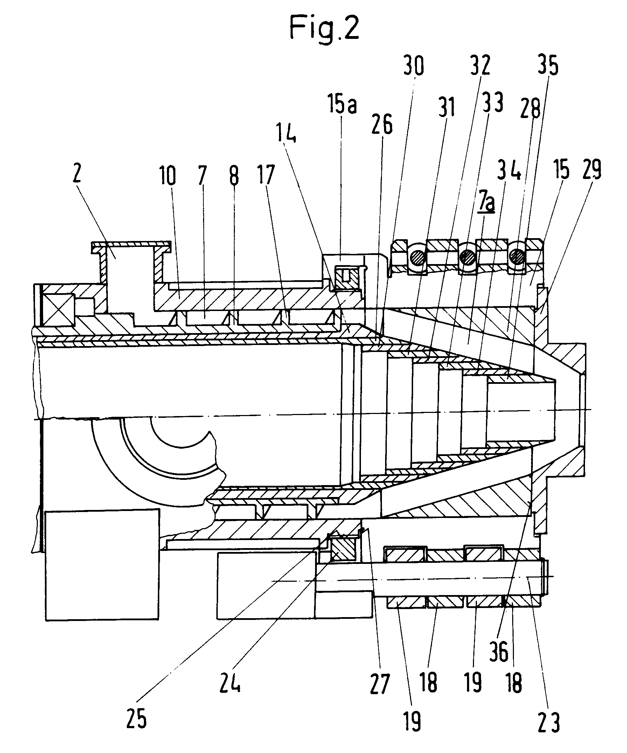

- Fig. 2: einen Längsschnitt durch einen Ummantelungskopf gemäß der Erfindung.

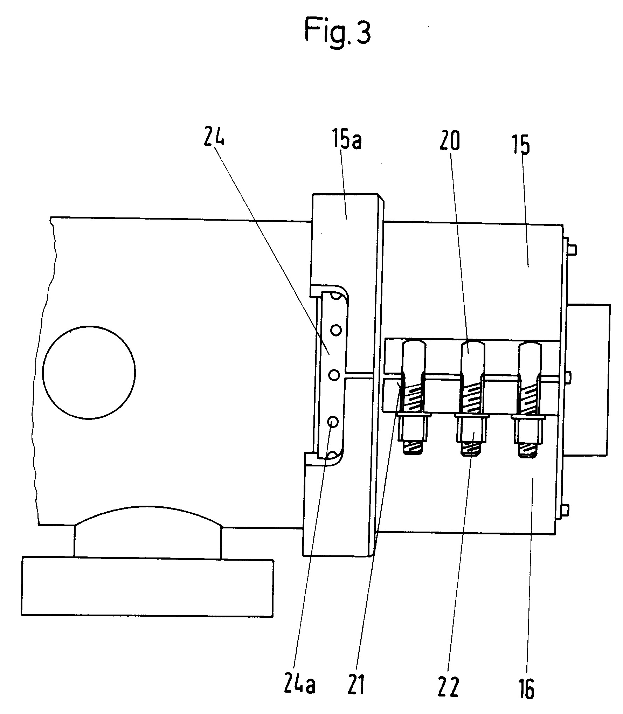

- Fig. 3: eine Draufsicht auf den Kopf, wie gezeigt in Fig. 2.
- Fig. 4: einen Querschnitt des Kopfes im geschlossenen und aufgeklappten Zustand.

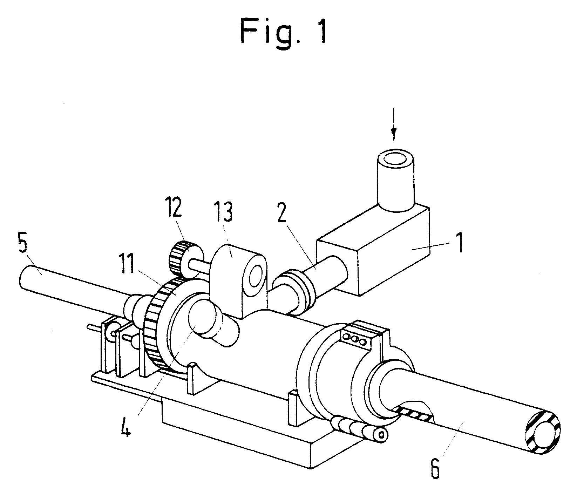

Die in Fig. 1 gezeigte Ummantelungseinrichtung setzt sich zusammen aus dem Extruder 1, der durch den Fließkanal 2 mit dem Ummantelungskopf 3 verbunden ist. Der Ummantelungskopf 3 weist eine Entgasungsöffnung 4 auf. Durch den Kopf 3 wird ein zylindrischer Körper 5 geführt und dabei mit einer Kautschukschicht 6 ummantelt.

Die im Extruder aufbereitete Kautschukmischung gelangt durch den Fließkanal 2 in den Verteilerraum 7, in dem ein hülsenförmig ausgebildeter Materialverteiler 8 angeordnet ist.

Der Materialverteiler 8 ist in einem nicht dargestellten Lager des Gehäuses angeordnet und weist auf seinem getriebeseitigen Ende ein Antriebszahnrad 11 (Fig. 1) auf. In das Antriebszahnrad 11 greift ein Ritzel 12 ein, welches von einem Motor 13 angetrieben wird.

In der Materialverteilerhülse 8 ist koaxial eine stationäre Zentralrohr 14 angeordnet, das nicht mitrotiert und das durch ein rahmenartiges Gestänge mit der Bodenplatte verbunden ist. In dem Zentralrohr 14 ist wiederum eine axial zwar bewegliche, aber beim Belegungsvorgang stationär gehaltene Führungshülse 26 angeordnet, für die Führung des zu belegenden Werkstückes. Die Führungshülse 26 wird durch ein nicht dargestelltes Gestänge mit einer Haltekonsole verbunden.

In dem Zentralrohr 14 für die Führung des zlindrisch zu ummantelnden Werkstückes 5 sind weitere Führungsrohre 30 bis 35 angeordnet, um jeweils Werkstücke unterschiedlichster Durchmesser ummantelns zu können. Je nach dem Durchmesser des zu ummantelnden Werkstückes 5 (Fig. 1) werden einzelne Führungsrohre 30 - 35 aus dem Kopf 3 entfernt.

Auf dem Rücken des Materialverteilers 8 sind wendelförmige Förderstege 17 angeordnet, welche das plastische Material zur Austrittsseite des Kopfes fördern und umfangsmäßig gleichmäßig verteilen.

Um die rotierende und fördernde Materialverteilerhülse 8 ist ein zylinderförmiges Gehäuse 10 angeordnet, welches an der Materialaustrittsseite des Kopfes aus zwei klappbaren Halbschalen 15 und 16 besteht.

Die Halbschalen 15 und 16 sind an ihrer unteren Trennfuge um den Lagerbolzen 23 verschwenkbar und weisen jeweils Scharnierteile 18 und 19 auf, die um den Lagerbolzen 23 greifen.

An ihrer oberen Trennfuge weist die Gehäusehälfte 15 Augbolzen 20 auf, die zwecks Verriegelung der Gehäusehälften 15 und 16 in Aussparungen 21 eingreifen und mittels Muttern 22 beide Gehäusehälften gegeneinander verspannen.

Um die radial gegeneinander verspannten Halbschalen 15 und 16 auch axial gegen das Zylindergehäuse 10 verspannen zu können, wird eine große Ringmutter 24 vorgesehen, die auf einem Gewinde 25 läuft. Die Ringmutter 24 läuft umfangmäßig gegen einen ringförmigen ausgekröpften Anschlag 15a der beiden Gehäusehälften 15 und 16, so daß die Halbschalen 15 und 16 in axialer Richtung gegen die ringförmige Stirnfläche 27 angepreßt werden und axial abdichten.

In den aufklappbaren Halbschalen 15 und 16 ist ein Innenkonus 28 angeordnet, der durch die Schulter Pos. 36 in den Halbschalben 15 und 16 gehalten wird. Das Mundstück 29 selbst wird durch nicht gezeigte Bolzen mit den Gehäusehälftn 15 und 16 verschraubt.

Nachfolgend wird ein Reinigungsvorgang des Kopfes 3 beschrieben.

Zunächst wird die Ringmutter 24 z.B. durch eine Viertelumdrehung zurückgeschraubt durch Einsetzen einer Stange in die Öffnungen 24a und einer radialen Drehung. Durch diese Drehung wird der Spanndruck der Ringmutter 24 gegen den Anschlag 15a der Gehäusehälften 15 und 16 gelöst.

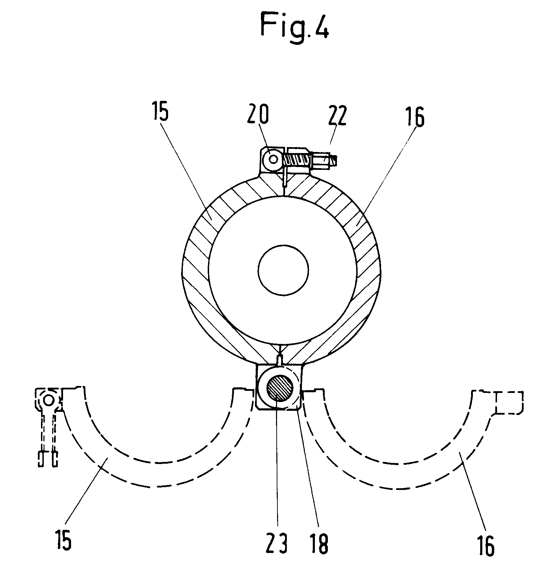

Dann wird das Mundstück 29 von den Halbschalen 15 und 16 abgeschraubt. Anschließend werden die Muttern 22 der Augbolzen 20 gelöst, um die Augbolzen 20 aus den Aussparungen 21 nach oben herausschwenken zu können, so daß die beiden Gehäusehälften 15 und 16 in die in Fig. 4 gezeigte Position heruntergeschwenkt werden können.

Danach ist dann der Innenkonus 28 frei zugänglich und wird axial nach vorne abgezogen, so daß die Kautschukmasse in dem Verteilerraum 7a von den jeweiligen Führungsrohren in einem Block abgezogen werden kann. Die Reinigung des Verteilerraumes 7a ist somit sehr schnell durchführbar, was von entscheidender Bedeutung ist bei einer Arbeitsbeendigung bzw. bei jedem Material- und Werkzeugwechsel.

## Patentansprüche

1. Einrichtung zum kontinuierlichen Ummanteln von zylindrischen Werkstücken mit einer Mischung aus Kautschuk oder thermoplastischem Kunststoff, bestehend aus einem Extruder (1) zum Plastifizieren der Mischung und einem Ummantelungskopf (3) sowie einem beide Maschinen miteinander verbindenden Fließkanal (2), wobei der Ummantelungskopf (3) durch ein Zylindergehäuse (10) gebildet wird, mit darin rotierender Materialverteilerhülse (8) auf deren Rücken wendelförmige Förderstege (17) angeordnet sind und mit einem koaxial in der Materialverteilerhülse angeordneten stationären Zentralrohr (14) für die Führung des zu ummantelnden Werkstückes,
**dadurch gekennzeichnet,**
daß das austrittsseitige Ende des Zylindergehäuses (10) durch, einen auswechselbaren Innenkonus (28) aufnehmende, aufklappbare Halbschalen (15, 16) gebildet wird.

2. Einrichtung nach Anspruch 1,
**dadurch gekennzeichnet,**
daß die Halbschalen (15, 16) radial gegeneinander und axial gegen das Zylindergehäuse (10) verspannbar ausgebildet sind.

3. Einrichtung nach Anspruch 1,
**dadurch gekennzeichnet,**
daß die Halbschalen (15, 16) an der einen Seite ihrer axialen Längstrennfuge durch ein Scharnier (18, 19, 23) miteinander verbunden sind und an der anderen Seite ihrer axialen Längstrennfuge mittels verschwankbarer Augbolzen (20, 22) arretierbar und gegeneinander verspannbar ausgebildet sind.

4. Einrichtung nach den Ansprüchen 1 und 2,
**dadurch gekennzeichnet,**
daß die axiale Verspanneinrichtung der Halbschalen (15, 16) durch eine die Halbschalen (15, 16) gegen das Kopfgehäuse (9) pressende, auf einem Außengewinde (25) des Zylindergehäuses (10) laufende, gegen einen Anschlag (15a) der Halbschalen (15, 16) drehbare Ringmutter (24) gebildet wird.

## Claims

1. Apparatus for the continuous coating of cylindrical work pieces with rubber or thermoplastics, consisting of an extruder (1) for plasticizing the compound, a coating head (3) and a flow channel (2) which connects the two machines, with the coating head (3) being formed by a cylindrical housing (10) which encloses a rotating material distribution sleeve (8) provided on its back with helical conveying flights (17) as well as a stationary central tube (14) that is arranged coaxially inside the material distribution sleeve and serves to guide the work piece to be coated,
**characterized** **in that**
the discharge end of the cylindrical housing (10) is formed by hinged semi-shells (15, 16) that take an exchangeable inner cone (28).

2. Apparatus as recited in claim 1,
**characterized in that**
the semi-shells (15, 16) are designed such as to allow them to be clamped radially one with the other and axially with the cylindrical housing (10).

3. Apparatus as recited in claim 1,
**characterized in that**
on one side of their axial, longitudinal partition line, the semi-shells (15, 16) are connected by means of a hinge (18, 19, 23) and that on the other side of their axial, longitudinal partition line they can be locked and clamped with each other by means of pivotable eye bolts (20, 22).

4. Apparatus as recited in claims 1 and 2,
**characterized in that**
the axial clamping device of the semi-shells (15, 16) is formed by an annular nut (24) which presses the semi-shells (15, 16) against the head housing (9), engages with an outer thread (25) of the cylindrical housing (10) and can be turned towards a limit stop (15a) of the semi-shells (15, 16).

## Revendications

1. Appareil pour l'enrobage en continu de pièces cylindriques avec un mélange de caoutchouc ou de matière thermoplastique se composant d'une extrudeuse (1) pour la plastification du mélange et d'une tête d'enrobage (3) ainsi que d'un canal d'écoulement (2) reliant les deux machines entre elles, la tête d'enrobage (3) étant formée par un carter cylindrique (10) avec une douille distributrice de matière (8) qui tourne la-dedans et qui comprend des filets de transport (17) hélicoïdaux sur le dos et avec un tuyau central (14) stationnaire qui est arrangé coaxialement dans la douille distributrice de matière et qui sert au guidage de la pièce à enrober,
**caractérisé en ce que**
le carter cylindrique (10) est formé sur le côté de sortie par des semi-coupelles (15, 16) rabattables qui logent un cône intérieur (28) échangeable.

2. Appareil selon revendication 1,
**caractérisé en ce que**
les semi-coupelles (15, 16) sont conçues de sorte à permettre un verrouillage en direction radiale l'une par rapport à l'autre et en direction axiale contre le carter cylindrique (10).

3. Appareil selon revendication 1,
**caractérisé en ce que**
les semi-coupelles (15, 16) sont reliées entre elles sur un côté de leur ligne de séparation axiale au moyen d'une charnière (18, 19, 23) et qu'elles sont conçues sur l'autre côté de leur ligne de séparation axiale de façon à permettre leur fixation et leur verrouillage l'une par rapport à l'autre au moyen de boulons à oeillet pivotables (20, 22).

4. Appareil selon les revendications 1 et 2,
**caractérisé en ce que**
le dispositif de verrouillage axial des semi-coupelles (15, 16) est formé par un écrou à anneau (24) qui presse les semi-coupelles (15, 16) contre le carter de tête (9), qui se déplace sur un filet extérieur (25) du carter cylindrique (10) et qui peut être tourné contre une butée (15a) des semi-coupelles (15, 16).
